(19) Europäisches Patentamt
European Patent Office
Office européen des brevets

(11) Veröffentlichungsnummer: **0 008 724**
**B1**

(12) # EUROPÄISCHE PATENTSCHRIFT

(45) Veröffentlichungstag der Patentschrift: **17.02.82**

(51) Int. Cl.³: **C 08 G 63/62**, C 08 G 63/64, C 08 G 2/32

(21) Anmeldenummer: **79103004.2**

(22) Anmeldetag: **17.08.79**

(54) **Verfahren zur Herstellung von Polymeren mit Diphenolcarbonat-Endgruppen.**

(30) Priorität: **28.08.78 DE 2837526**

(43) Veröffentlichungstag der Anmeldung: **19.03.80 Patentblatt 80/6**

(45) Bekanntmachung des Hinweises auf die Patenterteilung: **17.02.82 Patentblatt 82/7**

(84) Benannte Vertragsstaaten: **DE FR GB IT NL**

(56) Entgegenhaltungen:
**DE-A-1 420 232**
**DE-A1-2 636 784**
**DE-A1-2 726 417**
**GB-A-954 500**
**US-A-3 069 385**
**US-A-3 843 708**
**KUNSTSTOFF-HANDBUCH, Band VIII, 1973, HANSER-VERLAG, München, Seiten 16, 19**
**H. SCHNELL »Chemistry and Physics of Polycarbonates«, 1964, INTERSCIENCE PUBLISHERS, New York, London, Sydney, Seiten 53 bis 61**

(73) Patentinhaber: **BAYER AG, Zentralbereich Patente, Marken und Lizenzen, D-5090 Leverkusen 1, Bayerwerk (DE)**

(72) Erfinder: **König, Klaus, Dr., Heymannstrasse 50, D-5090 Leverkusen (DE)**
Erfinder: **Schreckenberg, Manfred, Dr., Doerperhofstrasse 15, D-4150 Krefeld (DE)**
Erfinder: **Lindner, Christian, Dr., Riehler Strasse 200, D-5000 Köln 60 (DE)**
Erfinder: **Süling, Carlhans, Dr., Carl-Leverkus-Strasse 10, D-5068 Odenthal (DE)**
Erfinder: **Freitag, Dieter, Dr., Hasenheide 10, D-4150 Krefeld-Traar (DE)**

**EP 0 008 724 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Herstellung von Polymeren mit Diphenolcarbonat-Endgruppen

Von den bekannten drei Verfahren zur Herstellung aromatischer Polycarbonate, dem Umesterungsverfahren, dem Zweiphasengrenzflächenverfahren und dem Verfahren in homogener Phase (auch Pyridinverfahren genannt) ist nur das letztere unmittelbar verwendbar, wenn zur Herstellung der Polycarbonate neben Diphenolen Diole, also Verbindungen mit zwei aliphatischen OH-Gruppen, insbesondere höhermolekulare Diole im nennenswertestem Umfang mitverwendet werden sollen (siehe beispielsweise US-PS 3 161 615, US-PS 3 030 335, US-PS 3 287 442, Journal of Polymer Science, Teil C, Polymer Symposia, Nr. 4 (1963) Teil 1, Seiten 707 – 730, US-PS 3 641 200 und US-PS 3 843 708). Unmittelbar geeignet ist auch noch das Suspensionsverfahren (siehe DE-OS 1 495 906 bzw. US-PS 3 290 409), eine Abwandlung des Verfahrens in homogener Phase.

Demgegenüber gibt es bei Verwendung des Umesterungsverfahrens Nebenreaktionen, insbesondere wenn als Diole Polyesterdiole eingesetzt werden (siehe US-PS 3 161 615, Spalte 5, Zeilen 29 – 37, US-PS 3 030 335, Spalte 4, Zeile 72 — Spalte 5, Zeile 5).

Das Zweiphasengrenzflächenverfahren wiederum verlangt die vorherige Umwandlung der einzusetzenden Diole entweder in Bischlorkohlensäureester (siehe US-PS 3 287 442, Spalte 7, Zeilen 32 ff bzw. Journal of Polymer Science, Vol. 55 (1961) Seiten 343 – 352) oder in solche mit phenolischen OH-Gruppen (siehe Journal of Polymer Science, Teil C (1963) loc. cit. Seite 719).

Die letztgenannte Umwandlung erfolgt bislang mit Erfolg nur zweistufig (siehe DE-OS 2 619 831 (Le A 16 933), DE-OS 2 636 784 (Le A 17 025), DE-OS 2 650 533 (Le A 17 516) und DE-OS 2 651 639 (Le A 17 535)).

Gegenstand der vorliegenden Erfindung ist nun ein Verfahren zur Herstellung von Polymeren mit Diphenolcarbonat-Endgruppen, das dadurch gekennzeichnet ist, daß Polyesterdiole oder Polyacetaldiole mit mittleren Molekulargewichten von $\overline{M}n$ (Zahlenmittel) 300 – 6000, vorzugsweise 500 – 4000, Kohlesäurebisarylester (z. B. Diphenylcarbonat) und Diphenole (z. B. Bisphenol A) gemeinsam, gegebenenfalls unter Mitverwendung von Katalysatoren, bei Temperaturen zwischen 80 und 270°C und im Vakuum zwischen 266 mbar und 0,133 mbar umgesetzt werden, wobei zur Herstellung von 1 Mol des Polymeren mit Diphenolcarbonat-Endgruppen n Mol Diol, m Mol Diphenol und p Mol Kohlensäurebisarylester eingesetzt werden, wobei n eine Zahl von 1 bis 20 und jeweils so gewählt ist, daß das Produkt aus n und dem um 26 vergrößerten Molekulargewicht $\overline{M}n$ (Zahlenmittel) des eingesetzten Diols eine Zahl zwischen 500 und 14 500 ist und wobei m eine beliebige Zahl zwischen 2 und 5 und p mindestens n + 1 höchstens aber (n + m) – 1 ist.

Gemäß GB-PS 954 500 werden Polyester-Carbonate durch Polykondensation hergestellt ausgehend von Polyestern mit Molekulargewichten von mindestens 10 000. Hierbei wird immer mit einem Diphenylcarbonat-Überschuß gearbeitet. Das Verhältnis von phenolischer OH-Komponente zu alkoholischer OH-Komponente ist zudem völlig anders, als das gemäß dem erfindungsgemäßen Verfahren. Somit sind auch die gemäß GB-PS 954 500 hergestellten Produkte von denen, die mit dem Verfahren der vorliegenden Erfindung erhalten werden, verschieden.

Gemäß GB-PS 898 775 werden ebenfalls Polyester-Carbonate durch Polykondensation hergestellt ausgehend meist von Polyestern mit Molekulargewichten von 2000 bis 4000; es wird meist die Diphenylcarbonat-Überschuß gearbeitet. Das Verhältnis von phenolischer OH-Komponente zu alkoholischer OH-Komponente ist jedoch immer anders, als das gemäß dem erfindungsgemäßen Verfahren. Somit sind auch die gemäß GB-PS 898 775 hergestellten Produkte von denen, die mit dem Verfahren der vorliegenden Erfindung erhalten werden verschieden.

Gemäß US-PS 3 069 385 werden höhermolekulare Polycarbonate durch Phosgenierung von niedermolekularen Polycarbonaten erhalten, welche letztere aromatische und aliphatische Diole alternierend über Carbonatgruppen eingebaut enthalten und außerdem phenolische OH-Gruppen haben (Spalte 2, Zeilen 5 bis 10). Gemäß Spalte 6, Zeilen 17 bis 23 können diese niedermolekularen Polycarbonate auch durch Umesterung beispielsweise von Diphenyl-Carbonat, Bisphenol-A und Ethylenglykol erhalten werden.

Es werden jedoch keine Reaktionsbedingungen ausgeführt, ebenso sind auch keine Polyesterdiole oder Polyacetatdiole als aliphatische Diole in US-PS 3 069 385 erwähnt.

Das Verfahren der vorliegenden Erfindung ist somit weder durch die vorstehenden drei Patentschriften vorweggenommen, noch nahegelegt.

Die erhaltenen Polymere mit Diphenolcarbonat-Endgruppen haben beispielsweise die folgende idealisierte Formel (I)

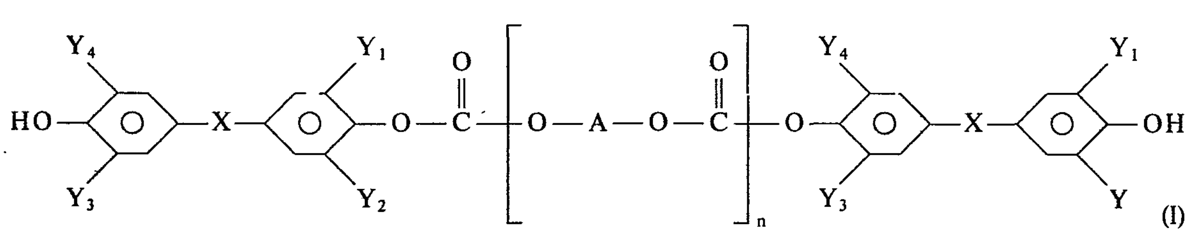

(I)

worin

A der bivalente Rest eines der erfindungsgemäß verwendbaren Diole ist, und die Endgruppen aus den Diphenolen der Formel (II) resultieren

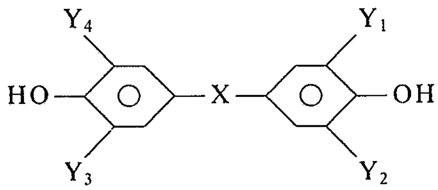 (II)

worin

X eine Einfachbindung,

$-CH_2-$ 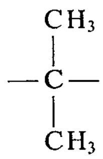 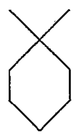 O S $SO_2$ oder 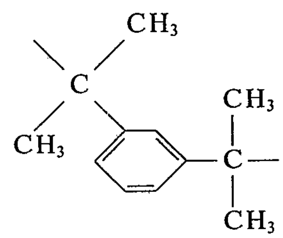

bedeuten und

$Y_1$ bis $Y_4$ gleich oder verschieden sind und Wasserstoff, $C_1-C_4$-Alkyl, wie beispielsweise Methyl, oder Halogen, wie beispielsweise Chlor oder Brom, und

n eine Zahl von 1 bis 20 bedeuten.

Geeignete Katalysatoren für die erfindungsgemäße Herstellung der Polymeren mit Diphenolcarbonat-Endgruppen sind:

a) Übergangsmetallverbindungen wie Titansäuretetraalkylester, Dialkylzinndicarboxylate, Zinndicarboxylate, Chelate von Fe, Zn, Co, Ni, Pb Carboxylate von Pb, Co, Ni, Fe und
b) Basen wie tert. Amine oder Oxide, Hydroxide, Carbonate, Alkoholate, Phenolate oder Carboxylate von Alkali- oder Erdalkalimetallen.

Der Katalysator wird in Mengen zwischen 0,0001 bis 1 Gew.-%, vorzugsweise 0,001 bis 0,1 Gew.-%, bezogen auf das Gesamtgewicht des eingesetzten Reaktionsgemisches, verwendet.

Das erfindungsgemäße Verfahren ist dadurch gekennzeichnet, daß die Polykondensation von aliphatischen Diolen und aromatischen Diphenolen mit Kohlensäure-bis-arylestern bei 80—270°C, vorzugsweise bei 100—220°C, und im Vakuum zwischen 266 mbar und 0,133 mbar durchgeführt wird, bis ca. 99,9% des bei der Reaktion freiwerdenden Phenols abdestilliert sind. Restmengen Phenol können dann mit inertem Gas ausgeblasen werden.

Das erfindungsgemäße Verfahren zur Herstellung der Polymeren mit Diphenolcarbonat-Endgruppen erfolgt vorzugsweise in Abwesenheit von Lösungsmitteln für die Reaktanten, insbesondere in Substanz.

Die Reaktionszeit für das Umesterungsverfahren zur Herstellung der Polymeren mit Diphenol-carbonat-Endgruppen beträgt in Abhängigkeit von Reaktionstemperatur sowie Art und Menge des Katalysators zwischen 2 und 60 Stunden.

Überraschenderweise entstehen bei der gemeinsamen Kondensation nicht unregelmäßige Polycarbonatgemische mit aliphatischen und aromatischen OH-Gruppen, sondern es erfolgt zunächst eine selektive Kondensation der erfindungsgemäß verwendbaren Diol-Komponente. Das Diphenol greift erst am Ende der Reaktion ein und wird mit den Kettenenden des Polycarbonats verknüpft, so daß in den erfindungsgemäßen Produkten der in den Rezepturen vorgegebene OH-Überschuß von 2 Mol fast ausschließlich in Form von phenolischen OH-Endgruppen enthalten ist.

Zwar ist aus GB-PS 885 442 die Umsetzung von aliphatischen Hydroxyverbindungen, aromatischen Hydroxyverbindungen mit Kohlensäureestern bekannt, doch handelt es sich hierbei um die Herstellung von verzweigten Polycarbonaten unter Einbeziehung von Polyhydroxyverbindungen mit mindestens 3 Hydroxylgruppen.

Geeignete Kohlensäure-bis-arylester sind insbesondere die der Formel (III)

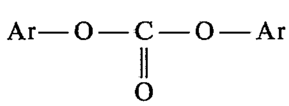 (III)

worin
Ar ein substituierter oder unsubstituierter Arylrest mit 6 bis 18 C-Atomen ist.

Als Substituent kommen besonders $C_1-C_4$-Alkyle sowie Nitro, Halogen, wie beispielsweise Chlor oder Brom, in Frage. Beispiele dafür sind Diphenylcarbonat, alkylsubstituierte Diphenylcarbonate wie die Di--toluylcarbonate, halogensubstituierte Diphenylcarbonate, wie die Di-chlorphenylcarbonate, Dinaphthylcarbonat sowie alkyl-substituierte und halogensubstituierte Dinaphthylcarbonate; hierbei können die Nitro-, Alkyl- oder Halogensubstituierten an beiden Phenylkernen bzw. an beiden Naphthylkernen der Diarylcarbonate gleich oder ungleich sein bzw. symmetrisch oder unsymmetrisch zueinander sein. Es sind also beispielsweise auch Phenyl-toluyl-carbonat, Phenyl-chlorphenyl-carbonat, 2-Toluyl-4-toluyl-carbonat oder 4-Toluyl-4-chlorphenyl-carbonat für das Verfahren geeignet.

Für die erfindungsgemäße Herstellung der Polymeren mit Diphenol-carbonat-Endgruppen geeignete Diphenole sind:

Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-äther, Bis-(hydroxyphenyl)-ketone, Bis-(hydroxyphenyl)-sulfoxide, Bis-(hydroxyphenyl)-sulfone, α,α-Bis-(hydroxyphenyl)-diisopropylbenzole

sowie deren kernalkylierte und kernhalogenierte Verbindungen. Diese und weitere geeignete aromatische Dihydroxyverbindungen sind z. B. in den US-Patentschriften 3 028 365, 2 999 835, 3 148 172, 3 271 368, 2 991 273, 3 217 367, 3 280 078, 3 014 891 und 2 999 846 und in den deutschen Offenlegungsschriften 2 063 050, 2 211 957 aufgeführt.

Geeignete Diphenole sind beispielsweise

Bis-(4-hydroxyphenyl)-methan, 4,4'-Dihydroxydiphenyl, 2,4-Bis-(4-hydroxyphenyl)-2-methylbutan,
α,α-Bis-(4-hydroxyphenyl)-p-diisopropylbenzol, 2,2-Bis-(3-chlor-4-hydroxyphenyl)-propan,
2,2-Bis-(3,5-dimethyl-4-hydroxyphenyl)-propan.

Bevorzugte Diphenole sind beispielsweise

2,2-Bis-(4-hydroxyphenyl)-propan, 1,1-Bis-(4-hydroxyphenyl)-cyclohexan,
2,2-Bis-(3,5-dichlor-4-hydroxyphenyl)-propan, 2,2-Bis-(3,5-dibrom-4-hydroxyphenyl)-propan,
2,2-Bis-(3,5-dimethyl-4-hydroxyphenyl)-propan, Bis-(3,5-dimethyl-4-hydroxyphenyl)-methan und
Bis-(4-hydroxyphenyl)-sulfid.

Die erfindungsgemäß geeigneten Diphenole können sowohl allein als auch zu mehreren eingesetzt werden.

Erfindungsgemäß geeignete Polyesterdiole sind beispielsweise Umsetzungsprodukte von zweiwertigen Alkoholen mit zweiwertigen, Carbonsäuren. Anstelle der freien Polycarbonsäuren können auch die entsprechenden Polycarbonsäurenanhydride oder entsprechende Polycarbonsäureester von niedrigen Alkoholen oder deren Gemische zur Herstellung der Polyesterpolyole verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein. Als Beispiele hierfür seien genannt: Oxalsäure, Malonsäure, Bernsteinsäure, Adipinsäure, Azelainsäure, Sebacinsäure, Phthalsäure, Isophthalsäure, Terephthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren, gegebenenfalls in Mischung mit monomeren Fettsäuren. Als zweiwertige Alkohole kommen, gegebenenfalls im Gemisch miteinander, beispielsweise Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethyl-cyclohexan), 2-Methyl-1,3-propandiol, ferner Thiodiglykol, Diäthylenglykol, Triäthylenglykol, Tetraäthylenglykol, Polyäthylenglykole, Dipropylenglykol, Polypropylenglykole, Dibutylenglykol und Polybutylenglykole in Frage.

Durch die Wahl des definierten Alkoholüberschusses wird der Gehalt an Hydroxyl-Endgruppen und damit das »mittlere« Molekulargewicht $\overline{M}n$ vorgegeben. Vorzugsweise werden Polyester aus aliphatischen Ausgangskomponenten eingesetzt.

Hydroxylgruppenhaltige Polyester im Sinne der Erfindung sind zum Beispiel auch solche, die durch Polymerisation eines Lactons, beispielsweise von ε-Caprolacton oder durch Kondensation einer Hydroxycarbonsäure, beispielsweise von ω-Hydroxycapronsäure auf einen Hydroxylgruppen enthaltenden Starter hergestellt werden. Das $\overline{M}n$ dieser Polyester ergibt sich wiederum rechnerisch wie vorstehend beschrieben.

Erfindungsgemäß geeignete Polyacetaldiole sind beispielsweise die, welche durch saure Kondensation von Diolen wie z. B. Diäthylenglykol, Triäthylenglykol, Butandiol-(1,4), Hexandiol-(1,6),

mit aliphastischen Aldehyden, wie z. B. Formaldehyd, Acetaldehyd hergestellt werden, und deren Molekulargewichte nach bekannten Methoden reguliert werden.

Erfindungsgemäße Polymere mit Diphenol-carbonat-Endgruppen sind somit beispielsweise die der idealisierten Formeln Ia-Ii

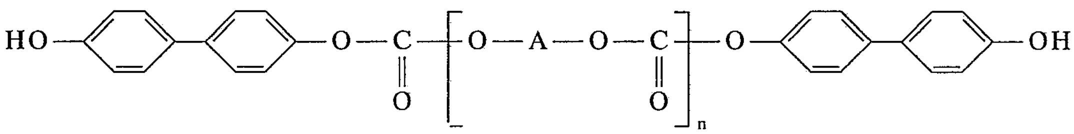

(Ia)

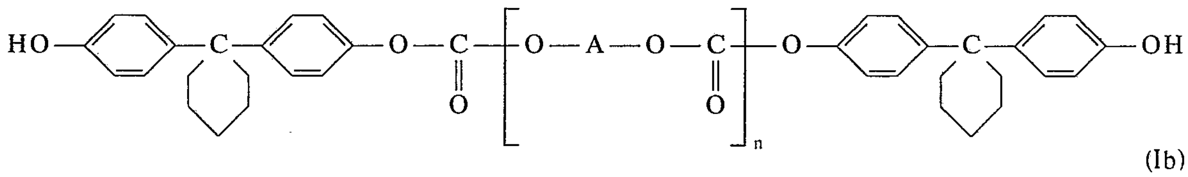

(Ib)

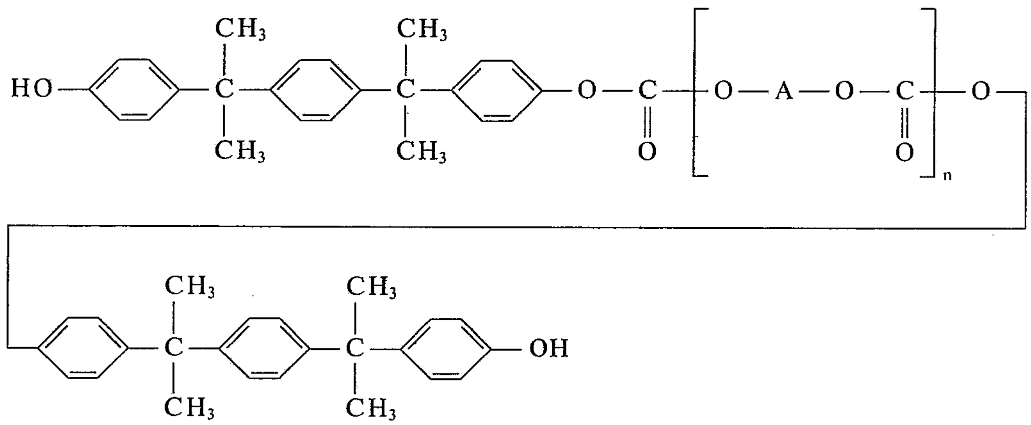

(Ic)

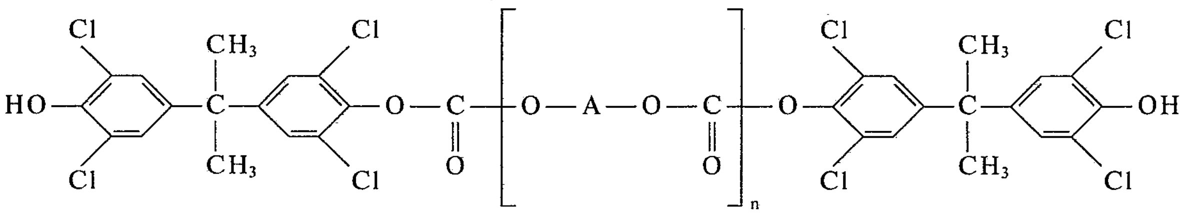

(Id)

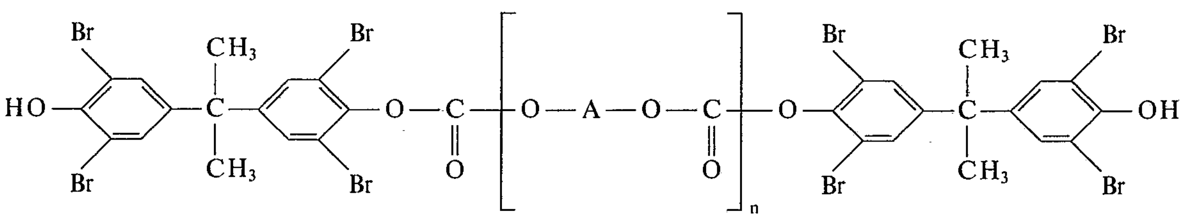

(Ie)

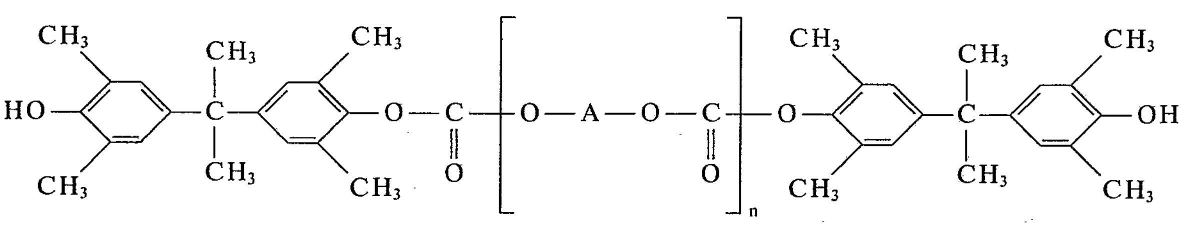

(If)

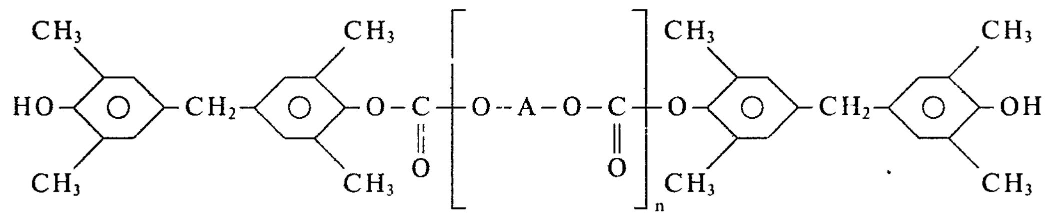 (Ig)

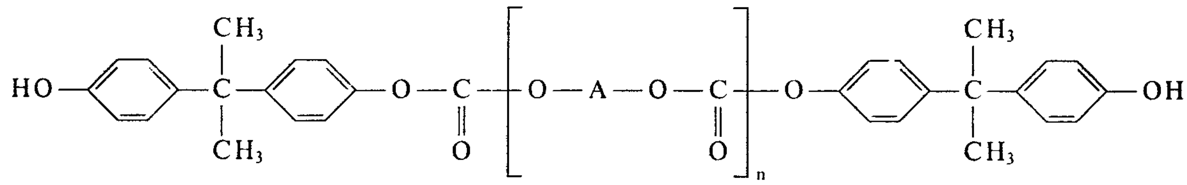

(Ih)

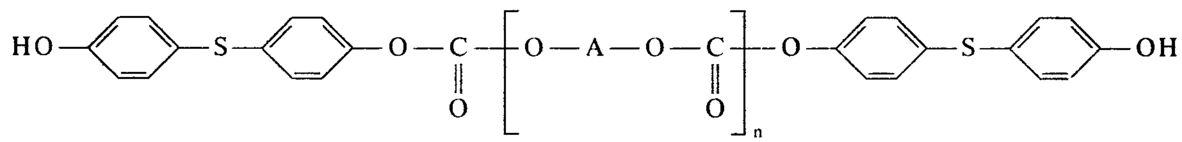

(Ii)

worin A der bivalente Rest der erfindungsgemäß geeigneten Diole ist und n eine Zahl von 1 bis 20 bedeutet.

Die erfindungsgemäßen Polymeren mit Diphenol-carbonat-Endgruppen eignen sich als Ausgangsbisphenole bei der Herstellung für Polycarbonate nach dem bekannten Zweiphasengrenzflächenpolykondensationsverfahren. Man erhält so beispielsweise die bekannten hochmolekularen aliphatischaromatischen Polycarbonat-Elastomeren.

Die Weiterverarbeitung der erfindungsgemäß erhaltenen Polymeren mit Diphenolcarbonat-Endgruppen aus den Polyesterdiolen erfolgt beispielsweise gemäß DE-AT-2 651 639 (Le A 17 535) zu verarbeitbaren Polyester-Polycarbonaten. Entsprechendes gilt für die Polymeren mit Diphenol-carbonat-Endgruppen aus den Polyacetaldiolen. Diese plastischen, mehr oder weniger elastischen segmentierten Polycarbonate finden bekanntlich beispielsweise als Dichtungsmaterial, als Isoliermaterial in der Elektrotechnik sowie als Ausgangsmaterial für Schläuche technische Verwendung.

Die Weiterverarbeitung und technische Verwendung der erfindungsgemäß erhaltenen Polymeren mit Diphenol-carbonat-Endgruppen kann auch beispielsweise gemäß US-PS 3 030 335, US-PS 3 287 442 oder US-PS 3 641 200 erfolgen.

Die in nachfolgenden Beispielen sowie in der voranstehenden Beschreibung aufgeführten mittleren Molekulargewichte sind Zahlenmittel $\overline{M}n$ und durch Bestimmung der OH-Zahl ermittelt.

Die Bestimmung der OH-Zahl der Polymeren mit Diphenolcarbonat-Endgruppen erfolgt durch Acylierung mit Acetanhydrid in Pyridin und Rücktitration der entstandenen Essigsäure und des Anhydridüberschusses mit NaOH. Dabei werden sowohl aliphatische als auch phenolische Hydroxylgruppen erfaßt. Verwendet man anstelle von Acetanhydrid, Phthalsäureanhydrid, so werden unter den Analysebedingungen nur aliphatische Hydroxylgruppen acyliert. Die Differenz beider Analysen ergibt den Gehalt an phenolischen OH-Gruppen.

## Beispiel 1

### Herstellung eines Hexandiol-Adipinsäure-Polyesters mit Diphenolcarbonat-Endgruppen des 2,2-Bis-(4-hydroxyphenyl)-propans (Bisphenol A) ($\overline{M}n=3170$)

1 molarer Ansatz

Ein 10-l-Dreihalskolben, ausgestattet mit Rührer, Kontaktthermometer, Füllkörperkolonne (8 cm Durchmesser, 80 cm Höhe) auf 45°C beheizter Destillationsbrücke und 2 l Vorlage wird mit 2250 g (1 Mol) eines Hexandiol-Adipinsäure-Polyesters der OH-Zahl 49,9 ($\overline{M}_n=2250$) 685 g (3 Mol) 2,2-Bis-(4-hydroxyphenyl)-propan und 642 g (3 Mol) Diphenylcarbonat beschickt. Nachdem das Gemisch bei 100°C aufgeschmolzen ist, werden 20 mg NaOH als Katalysator eingerührt. Nun wird ein

Vakuum von 0,93 mbar angelegt und innerhalb 4,5 Std. bei 170–200° C unter Abdestillieren von 562 g (ber. 564 g) Phenol zu einem bei 48° C schmelzenden Wachs kondensiert, das nach der Acetanhydridmethode eine OH-Zahl von 35,3 (ber. 37,2) aufweist.

Beispiel 2

Herstellung eines Polyacetals mit Diphenolcarbonat-Endgruppen des 2.2-Bis-(4-hydroxyphenyl)-propans ($\overline{M}_n = 3270$)

2 molarer Ansatz

5200 g (4 Mol) eines Polyacetals ($\overline{M}_n = 1300$), das durch literaturbekannte Kondensation von Hexandiol mit Paraformaldehyd hergestellt wurde, werden gemeinsam, wie in Beispiel 1 beschrieben, mit 912 g (4 Mol) Bisphenol A und 1284 g (6 Mol) Diphenylcarbonat kondensiert. Man erhält eine hochviskose Flüssigkeit mit einer OH-Zahl von 34.3 (Acetanhydrid-Methode).

**Patentansprüche**

1. Verfahren zur Herstellung von Polymeren mit Diphenolcarbonat-Endgruppen, dadurch gekennzeichnet, daß man Polyesterdiole oder Polyacetaldiole mit mittleren Molekulargewichten von $\overline{M}n$ (Zahlenmittel) 300–6000, Kohlensäurebisarylester und Diphenole gemeinsam, gegebenenfalls unter Mitverwendung von Katalysatoren zwischen 80 und 270° C und im Vakuum zwischen 266 mbar und 0,133 mbar umgesetzt werden, wobei zur Herstellung von 1 Mol des Polymeren mit Diphenolcarbonatendgruppen n Mol Diol, m Mol Diphenol und p Mol Kohlensäurebisarylester eingesetzt werden, wobei n eine Zahl von 1–20 und jeweils so gewählt ist, daß das Produkt aus n und dem um 26 vergrößerten Molekulargewicht $\overline{M}n$ (Zahlenmittel) des eingesetzten Diols eine Zahl zwischen 500 und 14 500 ist, und wobei m eine beliebige Zahl zwischen 2 und 5 und p mindestens n + 1, höchstens aber (n + m) – 1 ist.

2. Verfahren gemäß Patentanspruch 1, dadurch gekennzeichnet, daß als Ausgangsdiole solche mit mittleren Molekulargewichten von $\overline{M}n$ (Zahlenmittel) 500–4000 umgesetzt werden.

**Claims**

1. A process for the production of polymers containing terminal diphenol carbonate groups, characterised in that polyester diols or polyacetal diols having average molecular weights $\overline{M}n$ (number average) of from 300 to 6000, carbonic acid bis-aryl esters and diphenols are reacted together, optionally in the presence of catalysts, at 80 to 270° C and in a vacuum of from 266 mbar to 0.133 mbar, n moles of diol, m moles of diphenol and p moles of carbonic acid bisaryl ester being used to produce 1 mole of the polymer containing terminal diphenol carbonate groups, n being a number of from 1 to 20 and being selected in such a way that the product of n and the molecular weight $\overline{M}n$ (number average) increased by 26 of the diol used is a number of from 500 to 14 500, and m being any number from 2 to 5 whilst p has a value equal to at least n + 1 and to at most (n + m) – 1.

2. A process as claimed in Claim 1, characterised in that diols having average molecular weights $\overline{M}n$ (number average) of from 500 to 4000 are reacted as the starting diols.

**Revendications**

1. Procédé de production de polymères portant des groupes diphénolcarbonate terminaux, caractérisé en ce qu'on fait réagir des polyesterdiols ou des polyacétaldiols de poids moléculaires moyens ayant une valeur $\overline{M}n$ (moyenne en nombre) de 300 à 6000, des esters bis-aryliques d'acide carbonique et des diphénols conjointement, le cas échéant, en utilisant simultanément des catalyseurs, entre 80 et 270° C et sous un vide compris entre 266 mbars et 0,133 mbar, en utilisant, pour la production d'une mole du polymère porteur de groupes diphénylcarbonate terminaux, n moles de diol, m moles de diphénol et p moles d'ester bis-arylique d'acide carbonique, le nombre n étant un nombre de 1 à 20 et étant choisi dans chaque cas de manière que le produit de n par le poids moléculaire $\overline{M}n$ (moyenne en nombre) augmenté de 26 du diol utilisé soit un nombre compris entre 500 et 14 500, m étant un nombre quelconque entre 2 et 5 et p étant au moins égal à n + 1, mais au maximum égal à (n + m) – 1.

2. Procédé suivant la revendication 1, caractérisé en ce qu'on fait réagir comme diols de départ des diols ayant des poids moléculaires moyens de valeur $\overline{M}n$ (moyenne en nombre) de 500 à 4000.